# EUROPEAN PATENT SPECIFICATION

(11) **EP 1 601 560 B1**
(45) Date of publication and mention of the grant of the patent: **23.02.2011**
(21) Application number: 04716097.3
(22) Date of filing: 01.03.2004
(51) Int. Cl.: B60S 9/02

(54) **STABILIZER PAD FOR VEHICLES**
STABILISIERUNGSUNTERLAGE FÜR FAHRZEUGE
BLOC DE STABILISATION POUR VEHICULES

(30) Priority: 13.03.2003 US 387898; 04.08.2003 US 632242; 09.02.2004 US 773867
(43) Date of publication of application: 07.12.2005
(73) Proprietor: Lagsdin, Andry, Hanover, MA 02339 (US)
(72) Inventor: Lagsdin, Andry, Hanover, MA 02339 (US)
(74) Representative: Modiano, Micaela Nadia
(86) International application number: PCT/US2004/006069
(87) International publication number: WO 2004/083010

(56) References cited:
- US-A- 3 721 458
- US-A- 3 721 458
- US-A- 4 473 239
- US-A- 6 109 650
- US-A- 6 109 650
- US-B1- 6 270 119

## Description

### 1. Field of the Invention

The present invention relates generally to stabilizer pads for vehicles, and more particularly to pivotally mounted stabilizer pads.

### 2. Background of the Invention

Reference is made to my earlier pad design such as shown in International Publication Number WO 00/26070 published on May 11, 2000, where a resilient pad member is supported for working operation, and is yet reversible so that opposite sides thereof may be used as the ground engaging surface Refer also to U.S. patents 6,270,119 and 6,634,672. Although these pads have the characteristic of being reversible, they are further characterized by relatively complicated mechanisms for attaching and detaching the resilient pad from its weldment.

Accordingly, it is an object of the present invention to provide a reversible pad construction in which the reversing process can be performed readily and without the use of excessive components for attachment and detachment.

Another object of the present invention is to provide a reversible pad construction in which the pad is formed in a more unitary manner, and better adapted for optimum transfer of load forces from the machine, through the pad pack and to the supporting surface thereof.

### Summary of the Invention

In accordance with the present invention there is provided a stabilizer pad apparatus that comprises a pair of plate members supported from a stabilizer arm; and a pad assembly that is adapted for mounting between the pair of plate members. The pad assembly includes a resilient pad having opposite ground engageable work surfaces and opposite support surfaces, and a plurality of support members going through and extending from the opposite side support surfaces of the resilient pad. The support members are each adapted for engagement with at least one receiving slot of at least one of the plate members for mounting of the pad assembly to the plate members. At least one retaining member extends through the resilient pad and between the plate members for holding the pad assembly to the plate members. The retaining member is removable to permit the resilient pad to be moved between opposite work surfaces and to be re-engagable so as to permit selective positioning of either of the opposite work surfaces for use as a surface for ground engagement.

In accordance with aspects of the invention, the resilient pad may be formed as a molded rubber pad having integral holes for support members that extend through the pad, and at least one hole for receiving the at least one retaining member. Alternatively the resilient pad may comprise a plurality of laminated rubber layers. The opposite ground engageable work surfaces may be disposed transverse to the opposite support surfaces. The support members may be disposed in separate sets at each side of the resilient pad and extend outwardly from the opposite sides of the support surfaces. The support members may be comprised of elongated support rods, separate lugs, or posts. Each plate member may have a plurality of spaced slots that can be either straight or tapered to receive support members.

### Brief Description of the Drawings

For a better understanding of the present invention, reference is made to the drawings which are incorporated herein by reference and in which:
Fig. 1 is a perspective view of still another embodiment of the present invention;
Fig. 2 is a side view of the embodiment of Fig.1 in the claw position;
Fig. 3 is a front elevational view of the embodiment of Fig. 1 as taken along line 3-3 of Fig. 1;
Fig. 4 is a fragmentary exploded perspective view of the locking pin;
Fig. 5 is a perspective view of still another embodiment of the present invention;
Fig. 6 is a side view of the embodiment of Fig.5 in the claw position;
Fig. 7 is an exploded perspective view of the embodiment of Figs. 5 and 6;
Fig. 8 is a cross-sectional view taken along line 8-8 of Fig. 5;
Fig. 9 is a fragmentary cross-sectional view of an alternate pad construction;
Figs. 10A and 10B show cross-sectional views of pad constructions using a forced pin;
Fig. 11 is a perspective view of still a further embodiment of the present invention;
Fig. 11A is a perspective view of yet another embodiment of the present invention;
Fig. 11B is a cross-sectional view of the embodiment of Fig. 11A as taken along line 11B-11B of Fig. 11A;
Fig. 11C is a cross-sectional view taken along line 11C-11C of Fig. 11B;
Fig. 11D is an exploded perspective view of the embodiment of Fig. 11A;
Fig. 12 is a perspective view of a further embodiment of the invention;
Fig. 13 is a cross-sectional view through the pad of Fig. 12 as taken along line 13-13 of Fig. 12;
Fig. 14 is an exploded perspective view of the embodiment shown in Figs. 12 and 13;
Fig. 15 is a perspective view of an alternate embodiment of a pad assembly or pad pack with side plates;
Fig. 16 is a fragmentary cross-sectional view similar to the embodiment of Fig. 13 but showing the alternate construction of Fig. 15;
Fig. 17 is a cross-sectional view similar to that shown in Fig. 13 but showing an alternate embodiment in which the support pins are captured in grooves in the weldment;
Fig. 18 is still another alternate embodiment in a perspective view and in which the pad pins engage in a horizontal slot;
Fig. 19 is a fragmentary cross-sectional view taken along line 19-19 of Fig. 18;
Fig. 20 is also a fragmentary cross-sectional view like that shown in Fig. 19 but illustrating an alternate version in which the support pins have a stepped end to hold them in place;
Fig. 20A is a fragmentary cross-sectional view like that shown in Fig. 20 but illustrating a stepped pin, as well as a stepped shoulder in the support flange;
Fig. 21 is yet another perspective view of an alternate embodiment of the pad in which side plates are added to the sides of the weldment;
21; Fig. 22 is a fragmentary cross-sectional view taken along line 22-22 of Fig. 21;
Fig. 23 is a fragmentary cross-sectional view taken along line 23-23 of Fig. 21;
Fig. 24 is a fragmentary cross-sectional view similar to that illustrated in Fig. 23 showing the worn laminate pad before reversing the position thereof;
Fig. 25 is an exploded cross-sectional view with a first step in reversing the pad;
Fig. 26 is a cross-sectional view similar to that shown in Fig. 24 and illustrating the pad being reversed and clamped in place;
Fig. 27 is a perspective view of a further embodiment of the invention;
Fig. 28 is a cross-sectional view of the embodiment of Fig. 27 as taken along line 28-28 of Fig. 27;
Fig. 29 is an exploded perspective view similar to the embodiment of Fig. 27 with a single piece molded pad;
Fig. 30 is a perspective view of a further embodiment in which the resilient pad is supported directly by the support plate; and
Fig. 31 is a cross-sectional view of the embodiment of Fig. 30 and as taken along line 31-31 of Fig. 30.

### Detailed Description

This invention is not limited in its application to the details of construction and the arrangement of components set forth in the following description or illustrated in the drawings. The invention is capable of other embodiments and of being practiced or of being carried out in various ways. Also, the phraseology and terminology used herein is for the purpose of description and should not be regarded as limiting. The use of "including," "comprising," or "having," "containing", "involving", and variations thereof herein, is meant to encompass the items listed thereafter and equivalents thereof as well as additional items.

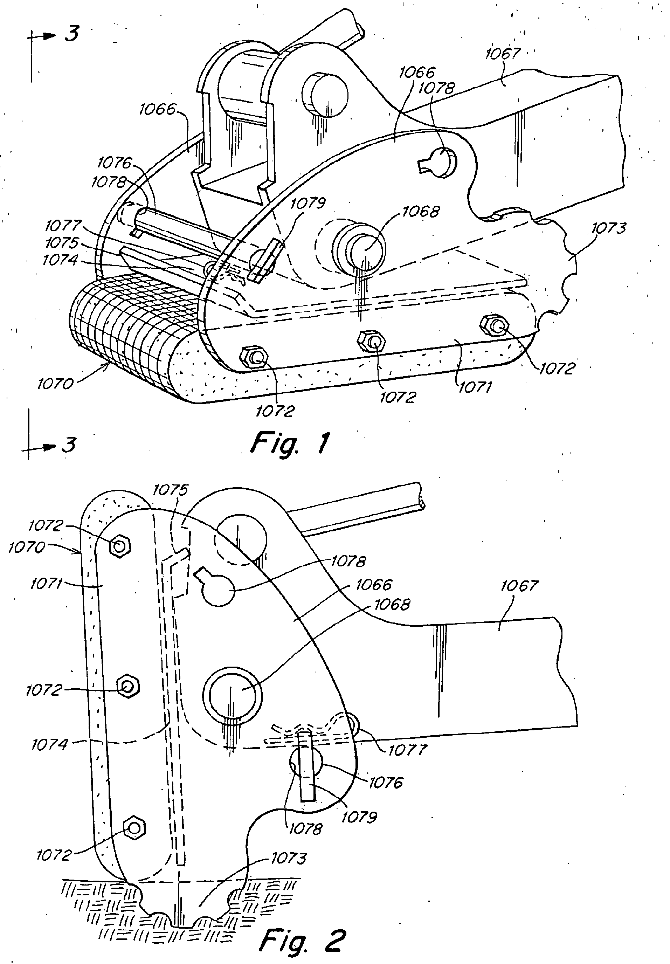

Reference is now made to one embodiment of the present invention illustrated in Figs. 1-4. In this particular embodiment the pad construction comprises a pair of laterally-disposed side plates or flanges 1066 that are supported from the stabilizer arm 1067 by means of the support pin 1068. The pin 1068 is received by the stabilizer arm 1067 and extends on either side of the arm for support of the side plates 1066. The pin 1068 may be free to rotate in the arm 1067. The pin 1068 may also be free to rotate relative to the flanges, or may be fixed against rotation relative to the flanges.

In the embodiment of Figs. 1-4 there is illustrated the laminated resilient pad 1070 that is secured along a lower edge 1071 of the respective side plates or flanges 1066. The laminated resilient pad 1070 is secured by means of three through bolts 1072. The pad itself is a laminated pad constructed of a plurality of secured resilient pad layers. All working loads associated with the apparatus are transferred from the resilient pad material to the side flanges or plates through the pad-supporting member whether it be by means of pins, rods, bolts, lugs, bars, plates, or the like.

The construction illustrate in Figs. 1-4 also preferably includes a connecting plate 1074 that extends between the laterally disposed side plates 1066. Preferably, the front of the plate 1074 is turned upwardly as indicated at 1075 in Fig. 1. The plate 1074 is primarily for support between the side plates 1066 and is positioned spaced above the pad pack, out of contact therewith.

In the embodiment illustrated in Figs. 1-4 the laminated resilient pad 1070 is also reversible. Once one of the wear surfaces becomes worn down or damaged, the bolts 172 may be withdrawn and the pad can then be reversed so that the opposite side of the pad becomes the ground engaging surface. The bolts are then reinserted and tightened.

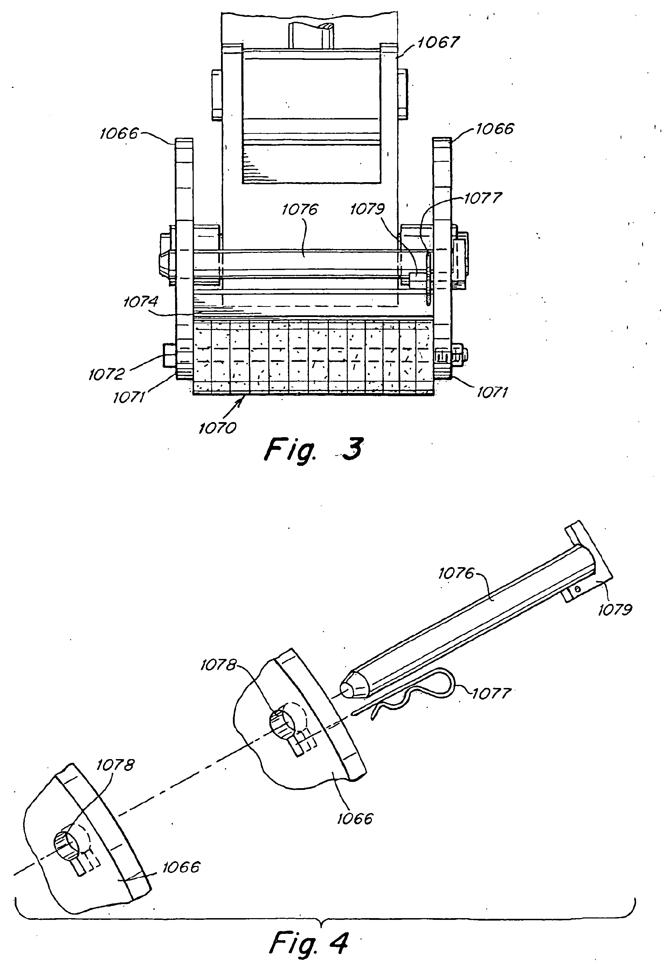

This embodiment of the present invention also employs a latch pin 1076 and associated hitch pin 1077. The side plates 1066 are provided with holes 1078 for receiving the latch pin 1076. Each of the holes has a keyway slot for receiving the head 1079 of the latch pin 1076. There is a small hole in the head 1079 of the latch pin 1076 for receiving the hitch pin 1077. Fig. 4 is an exploded view showing the various components of the latch arrangement including the latch pin 1076 and the hitch pin 1077. The latch pin 1076 is shown in Fig. 1 in its stored position, out of use. In this stored position the pin does provide some limited inhibiting of rotation of the pad assembly. In an alternate embodiment the latch pin 1076 can be secured by other means such as a bolt and nut or a large cotter key with a hitch pin.

In Figs. 1 and 2 it is noted that there are a pair of holes 1078 for receiving the latch pin in either of two different positions depending upon whether the resilient pad is going to be engaging the ground or whether the grouser end 1073 is going to be engaging the ground. In Fig. 1 the resilient side of the pad is engaging the ground while in Fig. 2 the pad has been moved to a position wherein the grouser points at 1073 are engaging the ground. It is furthermore noted that the rotation from one position to the other is not through 180° but instead is through approximately only a 90° rotation of the resilient pad construction. In Fig. 1 the latch pin 1076, in its stored position, is shown disposed between the end of the arm 1067 and the plate 1074. The latch pin 1076 is held in position by the hitch pin 1077 passing through the hole in the head 1079 of the latch pin 1076. In the position illustrated in Fig. 2 the latch pin is inserted in the other hole, the entire pad assembly having being rotated through 90° to the position illustrate in Fig. 2. In this position the latch pin is reinserted and the hitch pin 1077 engages the latch pin to lock it in position. In this position the latch pin 1076 is disposed under the arm 1067 basically holding the pad in the position illustrated in Fig. 2 preventing any significant rotation in either direction. This is desired when the grouser points are engaging the ground in order to provide a firm hold by the grouser end of the pad. It is also noted in this position that the end 1075 of the plate 1074 is about into engagement with the end of the stabilizer arm to inhibit rotation.

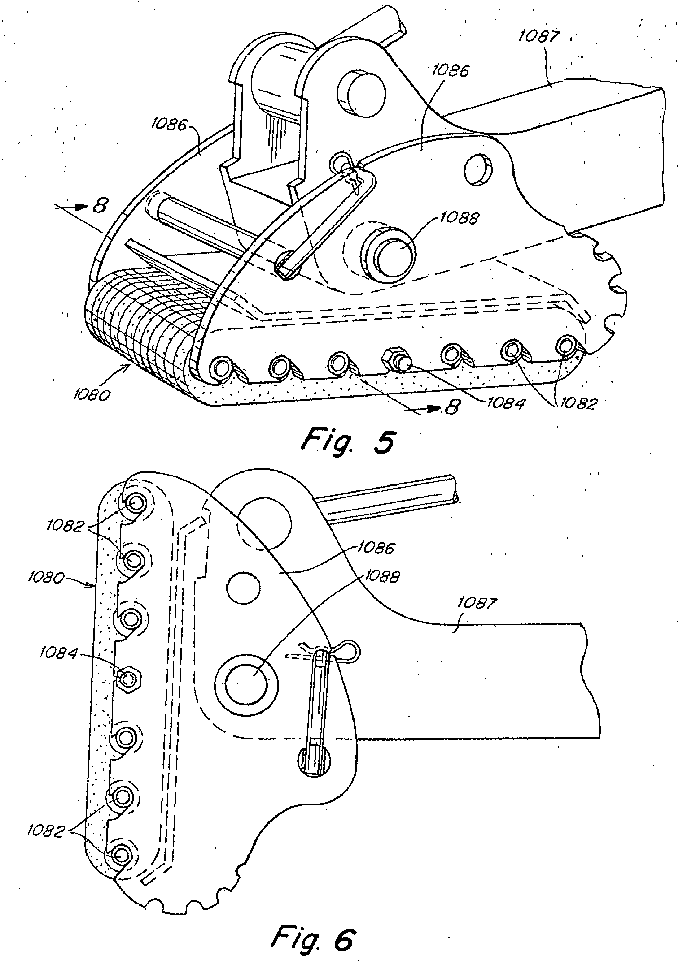

Reference is now made to Figs. 5-8 for another embodiment of the present invention employing a readily reversible pad pack that can be engaged witch the weldment in either of alternate positions. The reversal of the pad enables enhanced life of the overall pad construction because after one surface has been worn down the pad can be reversed and the opposite surface can then be used as the ground engaging surface.

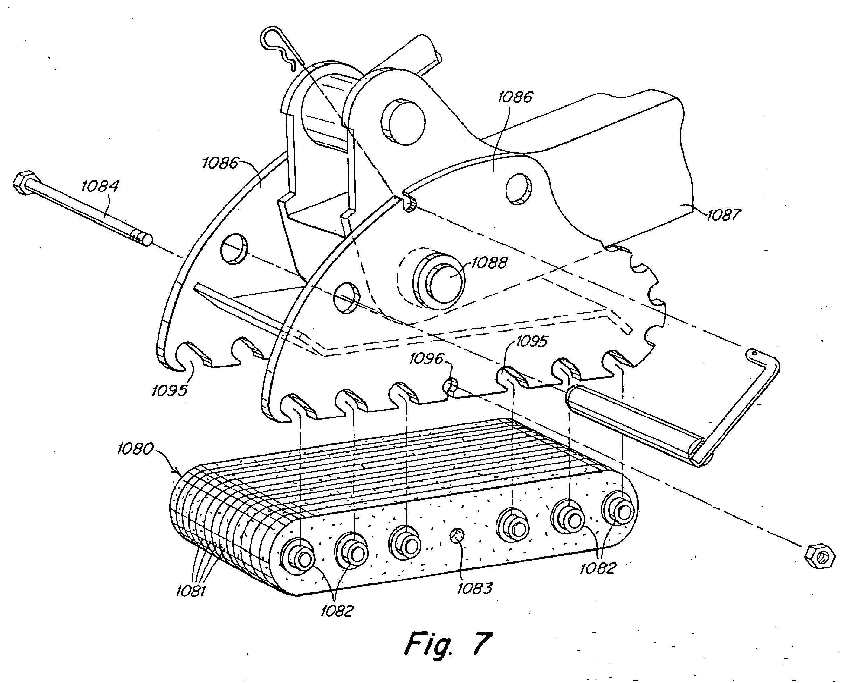

In the embodiment of Figs. 5-8, the weldment is comprised of a pair of laterally disposed plate members or flanges 1086 that are supported from the stabilizer arm 1087. A pin 1088 pivotally supports the side plates 1086 from the stabilizer arm 1087. The laminated resilient pad 1080 is constructed as a pad pack, illustrated in the exploded view of Fig. 7 as comprising a series of laminated layers 1081 that are held together by appropriate means such as the securing members 1082. In the embodiment illustrated in Fig. 7 there are six such members that are employed, although fewer or greater numbers may be employed. The laminated pad 1080 also has a centrally disposed through-hole 1083 for receiving the retaining bolt 1084.

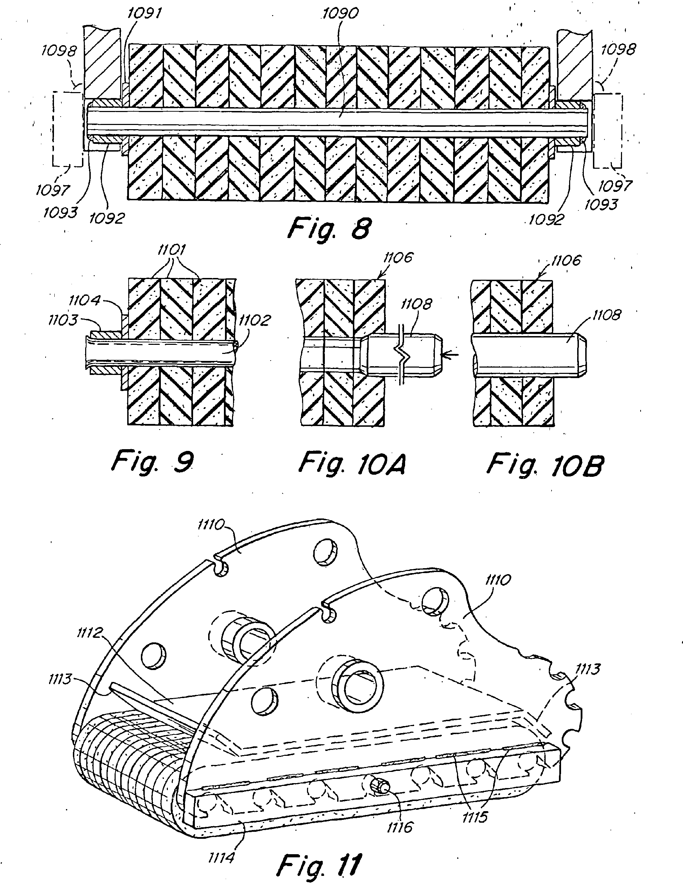

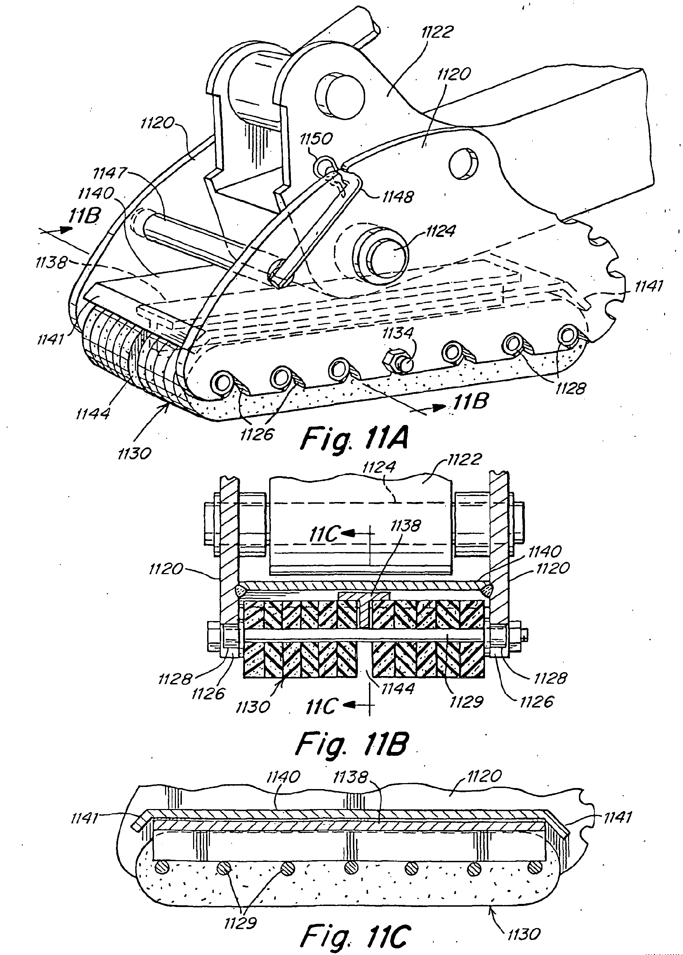

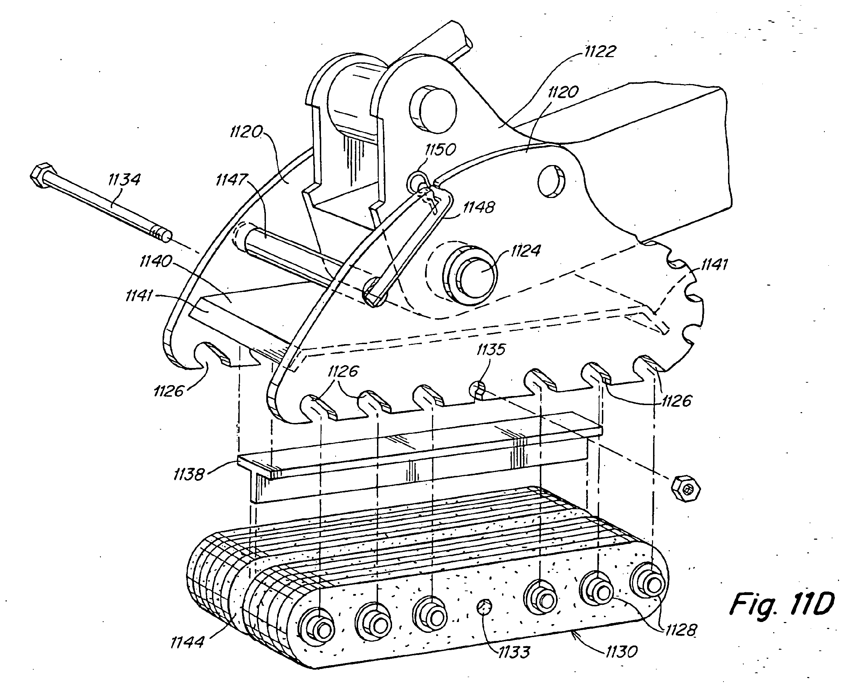

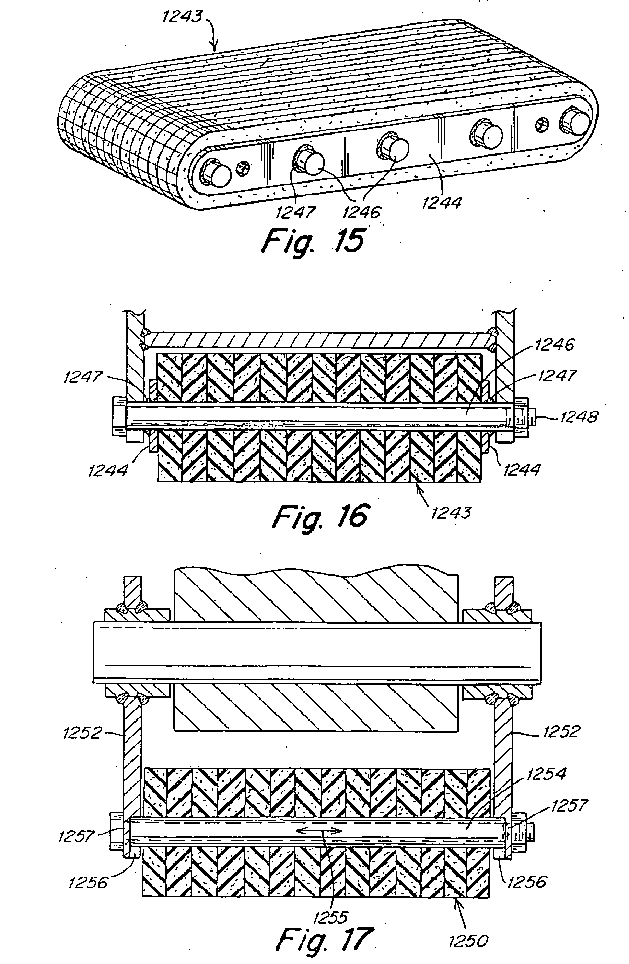

Fig. 8 illustrates the construction of the pad pack 1080, including the securing members for holding the pad together. This may include a center rod 1090. The laminated pad is drilled to snugly receive the rod 1090. The rod 1090 may be, for example, a three-quarter inch diameter rod that is adapted to snugly or even force fit through the laminated pad assembly. A three-quarter inch washer 1091 is placed over the end of the rod against the end laminate layer. A metal side plate (see Fig. 15) may also be used between the washer and the end laminate layer. The laminate layers are preferably compressed to a proper width and a one inch outside diameter sleeve 1092 is slid over the end of the rod and tack-welded as indicated at 1093 in Fig. 8. This arrangement holds the laminate construction in an integral pad pack configuration. Fig. 7 shows the angled slots 1095 in which the sleeves 1092 are adapted to mate. It is noted that these slots are preferably angled, although they could also be disposed perpendicular to the bottom edge of the flange. Once the sleeves are placed in the slots, then the resilient pad pack is maintained in position by inserting the retaining bolt 1084 through the hole 1083 in the pad as well as through the hole 1096 in each of the side plates 1086. Fig. 8 also shows in phantom outline a skirt 1097 that may be used to cover the ends of the sleeves 1092. This may be tack-welded as indicated at 1098. see also the skirt used in Fig. 11.

It is noted that in an embodiment such as illustrated in Fig. 7, the primary support for the pad pack 1080 is by means of the series of securing members 1082, each integral with the resilient laminated layers and secured therewith in what is termed a unitary pad pack, shown exploded away from the weldment in Fig. 7 These securing members may also be termed rods, lugs, posts, or the like. This arrangement, in combination with, at least one securing or retaining bolt, or the like 1084 provides a simple and economical means for holding the pad pack together, and also supporting it effectively from the weldment. The use of these support members, such as shown in Fig. 7, provides a simpler means to attach the pad pack to the weldment, such as in comparison to the use of flat plates extending through passages of the resilient pad. The flat plates require the use of more fastening hardware, as well as more material to attach the pad pack to the weldment.

The embodiment shown in Fig. 7 also provides a more even transfer of the load of the machinery through the pad pack to the pad supporting surface, particularly in comparison to an embodiment that uses flat mounting plates for the resilient pad. This is also accomplished without compromising the integrity of the laminate layers of the pad pack. This is accomplished to a great extent because, instead of having relatively large passages to receive the flat plates, there is provided a series of smaller passages spaced so as to provide more material therebetween, thus enhancing the integrity and strength of the pad construction.

Fig. 9 is a fragmentary cross-sectional view of an alternate embodiment of pad construction. This illustrates a fragment of the laminate layers 1101 being held together by a steel pipe 1102. The steel pipe may have an outer diameter of three quarters of an inch. This pipe may be peened over in order to retain the sleeve 1103 and washer 1104. This arrangement is useable instead of providing welding.

Figs. 10A and 10B illustrate still a further alternate arrangement illustrating a fragment of a pad at 1106 the use of a supporting rod 1108. This may be a one inch outer diameter rod or pin that is force-fit into an undersized hole through the resilient rubber pad. By providing an undersized hole and force-fitting, no further retainers are necessary and the pin will remain in a position wherein it extends a slight distance from either end of the laminate pad for engagement with the slots in the side plate.

Reference is now made to Fig. 11 which is a perspective view of a further alternate embodiment of a pad construction. This pad construction is similar to that described in Fig. 5 including side plates 1110 and interconnecting plate 1112 with the turned lip 1113 at either end. At one end the lip is turned up and at the other end it is turned down. The resilient rubber pad construction may be substantially identical to that described in Fig. 7 employing end sleeves that are adapted to engage in lower slots of the side plates. This embodiment also illustrates a pair of skirts 1114 that may be tack-welded at 1115. These skirts are used to protect the mounting slots from distortion during the use of the pad. Fig. 11 also illustrates a retaining pin 1116 that may be used in place of the retaining bolt 1084 illustrated in Fig. 7. The retaining pin 1116 may a three quarter inch diameter rod that is force-fit into an undersized hole in the pad. This pin may be pushed out with a hammer and drift pin. The pin 1116 when removed enables the reversal of the resilient rubber pack. The retaining pin 1116 may also be in the form of a bar, plate or other elongated member, and may be alternatively secured by being molded into a solid pack so that it would thereby be an integral part of the pack.

In accordance with still a further alternate version of the invention, and with reference to the embodiment of Fig. 11, the through hole in the pad can actually be of larger diameter than the pin or other support bar, thereby simplifying the pad assembly construction, with the pin or bar being glued into place. Alternatively, the pin or bar could be supported loosely in the through hole or passage, but would be retained in place by means of the side skirts 1114, when the pack is installed between the side flanges or plates 1110. In this arrangement the pad pack is preferably of laminated construction and is held together, such as by the aforementioned techniques including gluing in order to provide a self-supporting pad pack.

Reference is now made to a further embodiment of the present invention illustrated in Figs. 11A-11D. This embodiment of the invention is similar to that described in Fig. 5. The stabilizer pad construction includes a pair of laterally disposed side flanges or plates 1120 that is supported, by means of rotating pin 1124, from the distal end of the stabilizer arm 1122. The lateral flanges or plate members 1120 are substantially the same as described in Fig. 7 including at their lower edge receiving slots 1126. The slots 1126 receive the end sleeves 1128 at the ends of the support rods 1129 of the resilient pad pack 1130. The laminate rubber pad pack 1130 also is provided with a through hole 1133 that receives the retaining pin 1134. The retaining pin 1134, as in the embodiment of Fig. 7, is also received by the hole 1135 in each of the lateral plates 1120.

The laminate rubber pack 130 is meant to engage the lateral side plates 1120 in the same manner as described in connection with Fig. 7. The primary difference between the embodiment of Fig. 11 and that of Fig. 5 is that the embodiment of Fig. 11D now includes a T-bar 1138 that provides support between the cross-plate 1140 and the pad pack 1130. The cross-plate 1140 extends between the lateral side plates 1120. It is noted that the opposite ends of the cross-plate 1140 are turned down as indicated at 1141. This assists in retaining the T-bar 1138 in position, as illustrated in the cross-sectional view of Fig. 11C. The T-bar 1138 is generally free-floating between the pad and plate 1140, and provides some transfer of forces from the pad to the weldment, and from there, to the arm of the machine.

The laminated pad 1130, as noted, has a gap 1144 between opposite side laminate sections. In the preferred arrangement the securing rods 1129 are force-fit with the laminate leaving the gap 1144 between the different side sections. This gap allows for easy assembly and provides looser tolerances for the compressed rubber strips or layers. This gap is sized to receive the base of the T-bar 1138, as illustrated in Fig. 11B.

As illustrated in Figs. 11B and 11C, the bottom of the T-bar 1138 disposed above the rods 1129. Deflective forces against the bottom of the pad are transferred through the rods to the T-bar 1138 and the cross-plate 1140. This prevents the bending of the rods 1129.

Figs. 11A and 11D also illustrate a latch arrangement including the locking pin 1147 that engages between the side walls 1120. The locking pin 1147 has an extending leg 1148 that is secured by means of the hitch pin 1150. The latch pin is shown in its storage position in Fig. 11A. It is also noted that the side plates 1120 also have another hole for receiving the locking pin 1147 so that when the pad is moved to the grouser point engaging position, as in Fig. 6, the locking pin 1147 can retain the pad in that position. Refer to the discussion hereinbefore regarding the use of the pin 1076 in the version of Fig. 2. In the embodiment of Fig. 11A the hitch pin 1150 is used in the same location to retain the locking pin in place, holding the grouser points in a firm position in ground engagement.

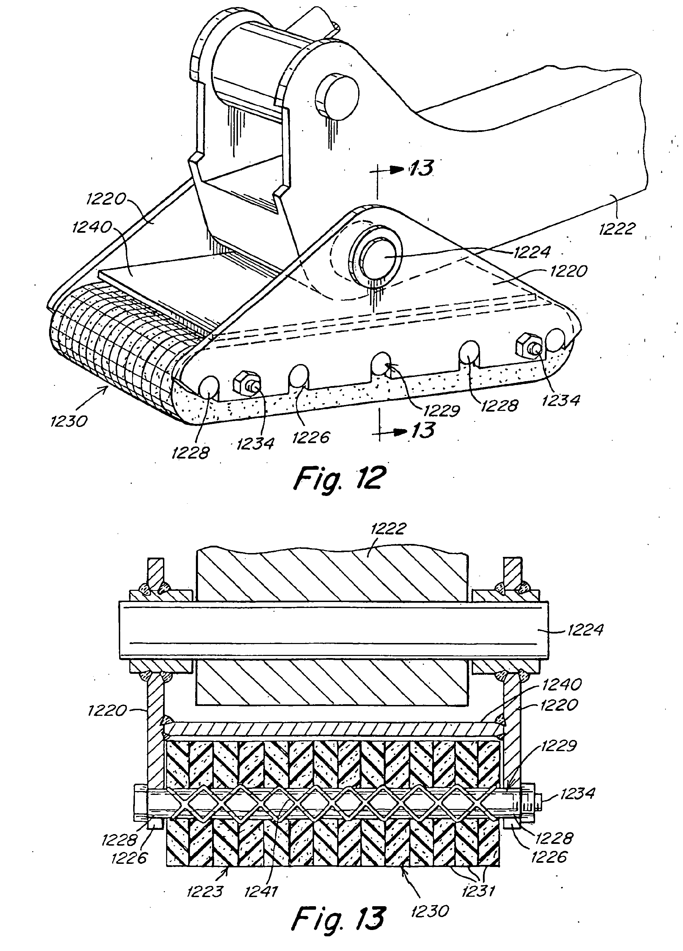

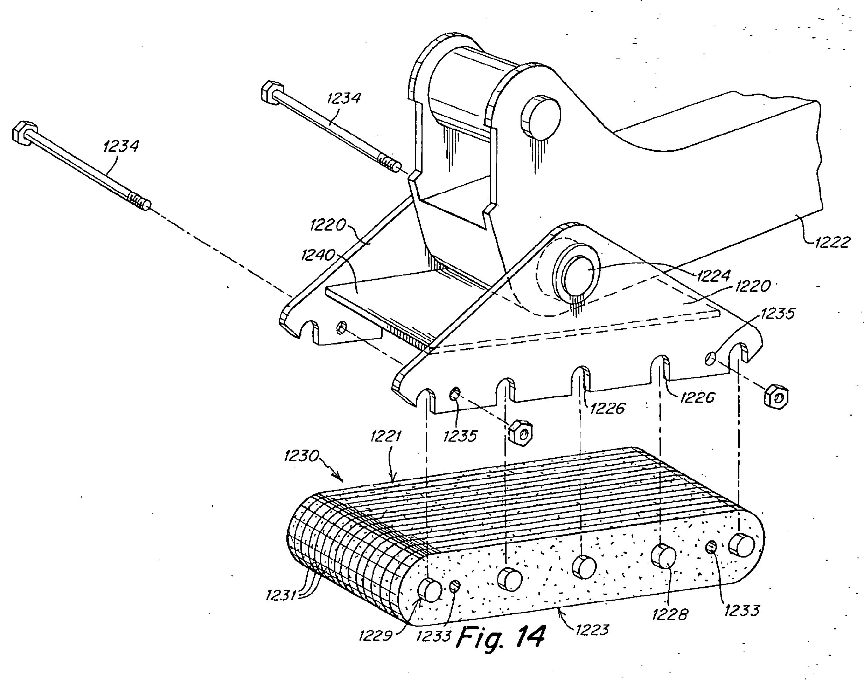

Reference is now made to a further embodiment of the present invention illustrated in Figs. 12-14. This embodiment of the invention is similar to that described in, for example, Fig. 5. However, in this particular embodiment the pad does not have both resilient pad and grouser point opposed sides. In Figs. 12-14 the weldment is meant primarily only for engagement with surfaces that are best suited for use with a resilient pad construction, such as on concrete or asphalt surfaces to provide support but without incurring damage to the supporting surface. The stabilizer pad construction includes a pair of laterally disposed side flanges or plates 1220 that is supported, by means of rotating pin 1224, from the distal end of the stabilizer arm 1222. The lateral flanges, plates or plate members 1220 include at their lower edge receiving slots 1226. See also the embodiment of Fig. 5 using slots for receiving the pad pack rods. The slots 1226 in the version of Fig. 12 are vertical slots rather than angled slots. The slots 1226 receive the ends 1228 of the support rods 1229 of the resilient pad pack 1230. The laminate rubber pad 1230 also is provided with a pair of through holes 1233 that receive respective retaining pins 1234, and as depicted in Fig. 14. The retaining pins 1134 are also received by the holes 1235 in each of the lateral side plates 1220.

The laminate rubber pack 1230 is meant to engage between the lateral side plates 1220 in the same manner as described in connection with, for example, Fig. 7. To provide additional support between the side plates there may also be provided a cross-plate 1240 extending between the lateral side plates 1220. It is noted that the opposite ends of the cross-plate 1240 are welded to the side plates, and preferably a small gap is provided between the cross-plate 1240 and the pad pack 1230, as depicted in Fig. 13.

The pad pack 1230, shown as a separate item in Fig. 14, is formed of a plurality of laminated rubber layers that are stacked together to form the pack. These layers may be compressed and the support rods then engaged. The support for the pack is preferably about midway of the pack so that it can be readily reversed from one working surface to the other. These working surfaces are depicted in Fig. 14 as ground engaging or working surfaces 1221 and 1223.

In previous embodiments described herein a force fit has been used to secure the rods or pins 1229 in place. However, there may be a need in certain applications to secure these pins or rods more positively. In the embodiment of Figs. 12-14 this is accomplished by means of a pin structure that is in the form of a reinforcing rod or other roughened surface rod or pin. This surface is most clearly depicted in Fig. 13 at 1241 in the form of a diagonal rib pattern similar to that used in a reinforcing rod typically used in cast concrete construction. The ends 1228 may be formed without the reinforcing ribs so as to easily mate with the slots in the side plates.

A jig or the like may be used to stack the laminate layers 1231 with the layers having been drilled with holes of a diameter so that the rods 1229 have to be force-fitted into the holes. In this way the rods are held firmly in place and the laminate layers are also firmly stacked against each other. This forms a unitary pad pack 1230 that can be easily secured in place with the use of only a couple of securing pins 1234 and associated nuts. In other embodiments of the invention only a single securing pin, or the like may be used.

Furthermore, the pad pack is also readily reversible once one side thereof is worn down. The pad pack is then dis-assembled by removal of the securing pins 1234 and the pad pack is reversed in position. For example, if the surface 1223 is the' first working surface and gets worn down, the pad pack can then be reversed 180 degrees so that the surface 1221 then is facing downwardly and functions as the ground-engaging surface. The embodiment depicted in Fig. 12 can also be provided with a grouser point side so that, not only is the pad pack reversible, but the weldment itself can be reversed between respective resilient and grouser point sides.

In the embodiment depicted in Figs. 12-14 it is noted that the body, particularly the sides of the pad pack, is supported essentially only by the side plates 1220. In another variation of this embodiment separate side pieces or plates may be provided. This is depicted in the embodiment shown in Fig. 15 which is a perspective view illustrating the pad pack 1243 having, on opposite sides thereof, the additional side plates 1244. Fig. 15 also shows the securing or retaining pins or rods 1246 that extend through the laminated layers. Each of the rods 1246 is secured to the plates 1244 at each end by a weld depicted at 1247. Fig. 16 also shows one of the two retaining pins 1248 that are used to hold the pad pack to the weldment. In Figs. 15 and 16 the opposite ends of the rods 1246 are received in slots of the weldment, such as in the manner that is depicted in Fig. 12.

In the previous embodiments of Figs. 12-16 one purpose for the structures disclosed is to prevent the support rods from slipping out of the pad pack during the heavy duty use of the machine. In Fig. 12 a reinforcing bar is used, while in Fig. 15 end plates are used welded to the support rods. Still another means of holding the supporting rods of the pad pack in place is depicted in Fig. 17. This embodiment depicts a pad assembly comprising a pad pack 1250 that includes a plurality of separate but joined pad layers in a laminate form, and side plates 1252 of a weldment. The pad pack may be held between the side plates in the same manner as depicted in, for example, Fig. 12 but without the use of any supporting cross-plate. As in Fig. 12, a series of spaced support rods may be employed, along with one or two securing pins that hold the pad pack to the weldment.

The support rods 1254 are depicted in Fig. 17 as engaging with the corresponding side plates 1252. In order to prevent lateral movement, such as in the directions illustrated by double-headed arrow 1255, instead of providing through holes in the side plates, only a partial groove 1256 is used at each end of the rod and in each said plate 1252. A separate groove 1256 can be provided for each support rod 1254, or alternatively a single groove can extend along the side plates to receive all rods. The securing pins pass through the side plates and pad pack in the manner depicted in Fig. 14. It can readily be seen that with the use of the grooves 1256, the rod 1254 is prevented from lateral movement, this movement essentially being blocked by the wall 1257 of the side plates that at least partially define the groove 1256.

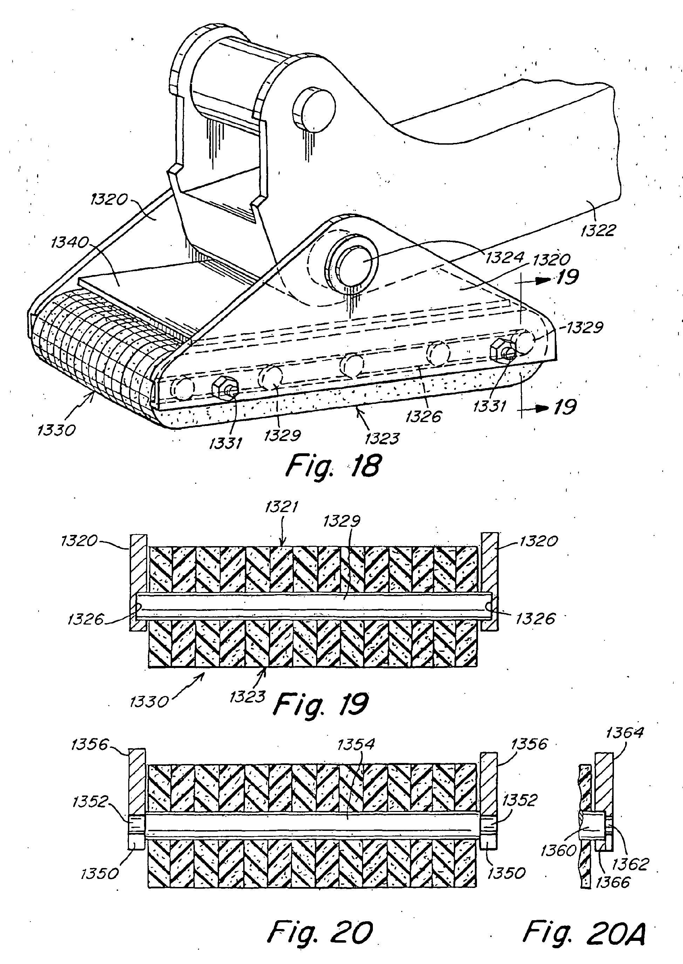

Reference is now made to a further embodiment of the present invention illustrated in Figs. 18 and 19. Fig. 18 is a perspective view and in which the pad support rods engage in a horizontal slot, rather than the individual vertical slot of Fig. 17. Fig. 19 is a fragmentary cross-sectional view taken along line 19-19 of Fig. 18. This embodiment of the invention is similar to that described in, for example, Fig. 12. In Figs. 18 and 19 the weldment is meant primarily only for engagement with surfaces that are best suited for use with a resilient pad construction, such as on concrete or asphalt surfaces. The stabilizer pad construction includes a pair of laterally disposed side flanges or plates 1320 that are supported, by means of rotating pin 1324, from the distal end of the stabilizer arm 1322. The lateral flanges or plate members 1320 are substantially the same as described in Fig. 12, but instead include at their lower edge a single horizontally-disposed receiving groove or slot 1326.

The groove 1326 receives the ends of the support rods 1329 of the resilient pad pack 1230. In this embodiment, rather than providing one slot for each support rod, there is provided a single horizontal groove 1326. With this arrangement the pad pack is engaged horizontally rather than vertically with the weldment with one end of all of the support rods 1329 passing through the single groove 1326. The securing pins 1331 are then used in the same manner as in Fig. 14 to hold the pad pack with the weldment.

The laminate rubber pad 1330 also is provided with a pair of through holes that receive respective retaining pins 1331. The retaining pins 1331 are also received by holes in each of the lateral plates 1320. These pins 1331 may be bolts and nuts.

The laminate rubber pack 1330 is meant to engage between the lateral side plates 1320 in the same manner as described in connection with, for example, Fig. 7. To provide additional support between the side plates there may also be provided a cross-plate 1340 extending between the lateral side plates 1320. It is noted that the opposite ends of the cross-plate 1340 may be welded to the side plates, and preferably a small gap is provided between the cross-plate 1340 and the pad pack 1330, as depicted in Fig. 18.

The pad pack 1330, shown in Fig. 18, is formed of a plurality of laminated rubber layers that are stacked together to form the pack. The support for the pack is preferably about midway of the pack so that it can be readily reversed from one working surface to the other These working surfaces are depicted in Fig. 14 as ground engaging or working surfaces 1321 and 1323.

Reference is now made to a further alternate version of the invention as depicted in Fig. 20. This cross-sectional view is similar to that illustrated in Fig. 19, but instead of providing a groove or grooves in the side plates, a slot 1350 is provided in conjunction with a stepped (reduced diameter) end 1352 of each support rod 1354. A pair of retaining pins is also employed in this version for holding the pad pack in the weldment. The reduced diameter end 1352 of the support rod forms a flange or shoulder that butts up against an inner surface of the side plate 1356 preventing any lateral movement of the support rod 1354. These ends 1352 are provided at both ends of the support rod.

Fig. 20A shows another version in which the support rod 1360 has a stepped, smaller diameter end 1362, while the side plates 1364 are also formed with a slot that is stepped as illustrated at 1366.

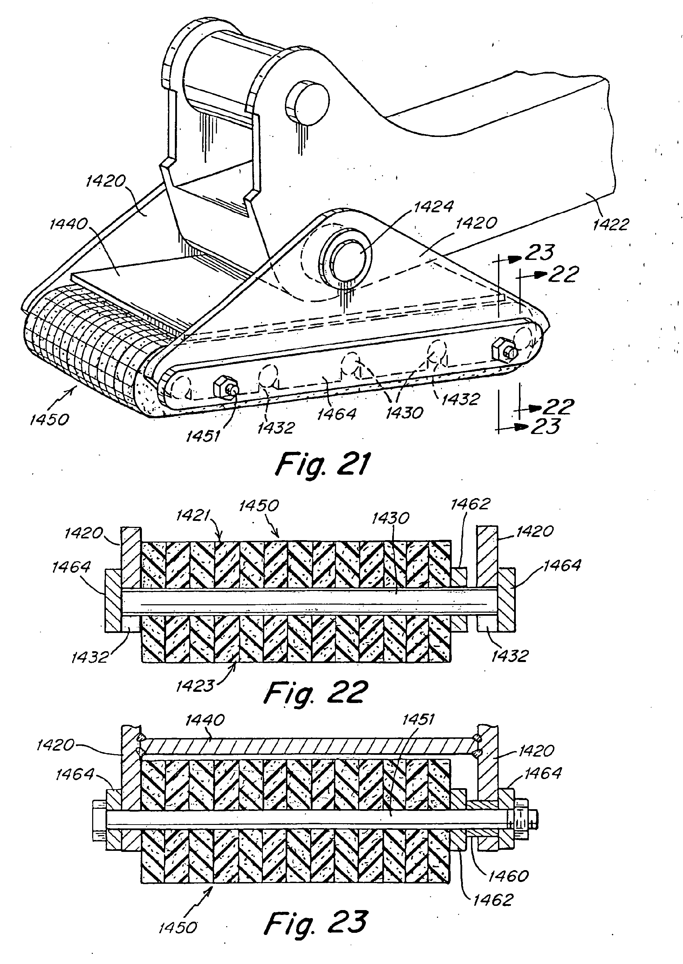

Reference is now made to still a further embodiment of the present invention illustrated in Figs. 21-23. Fig. 21 is a perspective view in which the pad pins engage corresponding vertical slots. Fig. 22 is a fragmentary cross-sectional view taken along line 22-22 of Fig. 21. Fig. 23 is a fragmentary cross-sectional view taken along line 23-23 of Fig. 21. This embodiment of the invention is similar to that described in, for example, Fig. 12, but employs a different means for holding the pad support rods 1430 in place. In Figs. 21-23 the weldment is meant primarily only for engagement with surfaces that are best suited for use with a resilient pad construction, such as on concrete or asphalt surfaces. In an alternate embodiment the weldment may be additionally provided with grouser points in which case the entire weldment is meant to be reversible between the resilient pad side and the grouser point side. The stabilizer pad construction includes a pair of laterally disposed side flanges or plates 1420 that are supported, by means of rotating pin 1424, from the distal end of the stabilizer arm 1422. The lateral flanges or plate members 1420 are substantially the same as described in Fig. 12, including vertical slots 1432 at their lower edge for receiving the support rods 1430.

The laminate rubber pad 1450 also is provided with a pair of through holes that receive respective retaining pins 1451. See Fig. 21 where two pins are used. Fewer or greater than two pins may be provided. The retaining pins 1451 are also received by holes in each of the lateral plates 1420. Fig. 23 also shows the addition of a sleeve 1460 disposed within a hole in the side plate 1420 and for receiving the securing pin 1451.

The laminate rubber pack 1450 is meant to engage between the lateral side plates 1420 in the same manner as described in connection with, for example, Fig. 7. To provide additional support between the side plates there may also be provided a cross-plate 1440 extending between the lateral side plates 1420. It is noted that the opposite ends of the cross-plate 1440 may be welded to the side plates, and preferably a small gap is provided between the cross-plate 1440 and the pad pack 1450, as depicted in Fig. 23.

The pad pack 1450, shown in Fig. 21, is formed of a plurality of laminated rubber layers that are stacked together to form the pack. The support rods may be press fit or force fit with the laminate layers. These rods may also be provided with a roughened or abraded external surface to help to hold them in place. A clamping bar 1462 is also illustrated in Figs. 22 and 23 on one side of the laminate layers. This clamping bar may be provided as illustrated in, for example, Fig. 15 to hold at least one side of the laminate pack. A pair of clamping bars may also be provided at opposite sides of the pad pack. The support for the pack is preferably about midway between working surfaces of the pack so that it can be readily reversed from one working surface to the other. These working surfaces are depicted in Fig. 22 as ground engaging or working surfaces 1421 and 1423.

To retain the pad pack in place, and in particular the support rods 1430, there is also provided on either side of the pad pack the retaining side plates 1464. The side plates 1464 retain the ends of the support rods 1430 preventing them from moving in either direction and out of the pad pack. As shown in Fig. 22 the rods 1430 are preferably flush with the outer surface of the side plates 1420. The side plates 1464 thus cover the end of each rod 1430 to prevent each of them from moving laterally. As illustrated in Fig. 23, the side plates are held in position by means of the retaining pins 1451. These pins extend through holes in the side plates 1464, the clamping bar 1462 and the laminate pad pack 1450.

In the embodiment of Figs. 21-23 there is provided a sleeve 1460 and a clamping bar 1462. In an alternate embodiment these elements may be removed. In that case the laminate may then be made wider as is apparent from Fig. 23.

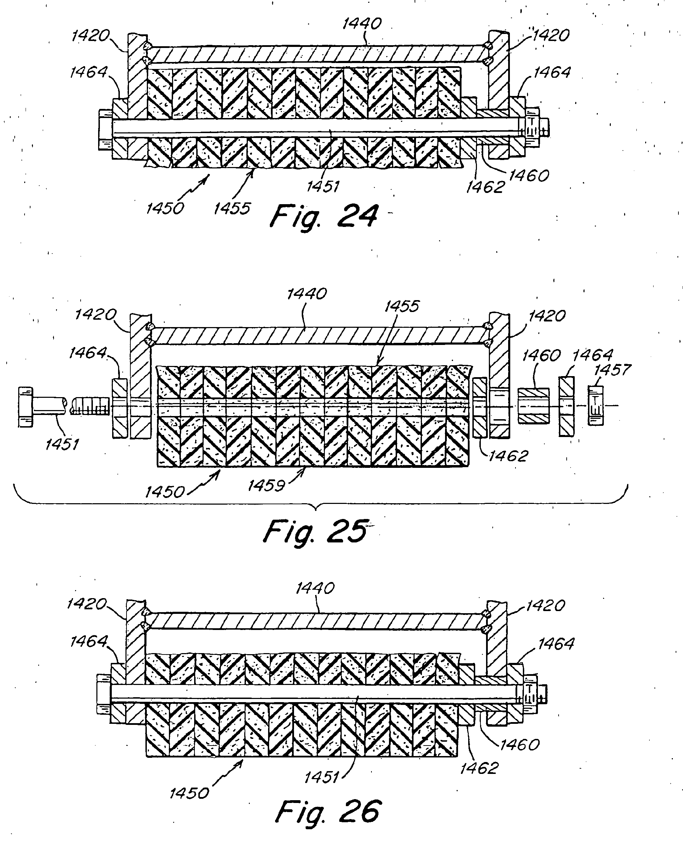

Reference is now made to Figs. 24-26 for a further illustration of the principles of the present invention. Fig. 24 is a fragmentary cross-sectional view similar to that illustrated in Fig. 23 showing the worn laminate pad before reversing the position thereof. Fig. 25 is an exploded cross-sectional view with a first step in reversing the pad by disassembling components. Fig. 26 is a cross-sectional view similar to that shown in Fig. 24 and illustrating the pad having been reversed and clamped in place. In Figs. 24-26 the same reference numbers are used as identified in Figs. 21-23.

In Fig. 24 the pad pack 1450 is shown in a worn condition with the worn surface 1455 illustrated as almost worn to the level of the side plates 1420. This occurs after substantial use of the pad in that particular position. Fig. 25 illustrates the pad pack being reversed, at an initial stage wherein the retaining pins 1451 have been disengaged. The retaining pins 1451 are threaded at their end, as illustrated, to receive the nut 1457. When the nut is removed then the assembly can be dismounted. The retaining pins are withdrawn, along with the side plates 1464. This allows one to reverse the position of the pad pack so that the worn side 1455 is now facing upwardly. Fig. 25 thus illustrates the unused surface 1459 as the downwardly facing work surface of the pad pack 1450. Lastly, Fig. 26 shows the pad pack then reassembled with the retaining pins secured in place.

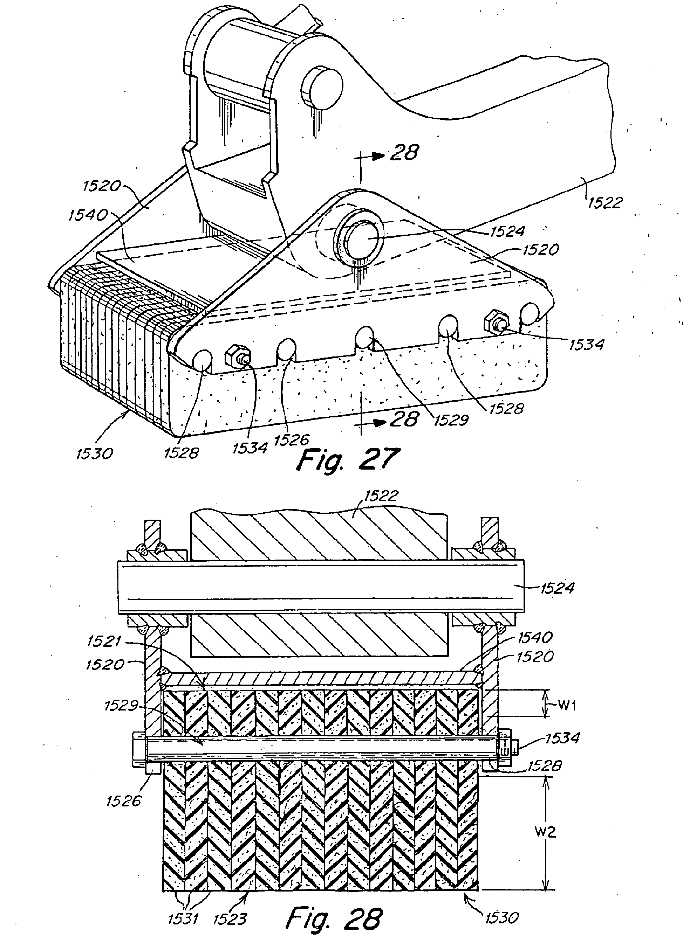

Reference is now made to a further embodiment of the present invention illustrated in Figs. 27-29. This embodiment of the invention is similar to that described in, for example, Fig. 12. In this particular embodiment the pad does not have both resilient pad and grouser point opposed sides. In Figs. 27 and 28 the weldment is meant primarily only for engagement with surfaces that are best suited for use with a resilient pad construction, such as on concrete or asphalt surfaces. This pad may also be referred to as a "street pad". The stabilizer pad construction includes a pair of laterally disposed side flanges or plates 1520 that is supported, by means of rotating pin 1524, from the distal end of the stabilizer arm 1522. The lateral flanges, plates or plate members 1520 are substantially the same as described in Fig. 12, including at their lower edge receiving slots 1526. See also the embodiment of Fig. 5 using slots for receiving the pad pack rods. The slots 1526 in the version of Fig. 27 are vertical slots rather than angled or tapered slots. The slots 1526 receive the ends 1528 of the support members, posts or rods 1529 of the resilient pad pack 1530. These ends may also be referred to as lugs or posts. The laminate rubber pad 1530 also is provided with a pair of through holes that receive respective retaining pins 1534, and as depicted in Figs. 27 and 28. The retaining pins or bolts 1534 are also received by holes 1535 in each of the lateral side plates 1520. In Figs. 27 and 28 the retaining pins are in the form of elongated bolts, each with an end securing nut, as illustrated. In other embodiments other types of securing members may be used such as rods with end slots for receiving horseshoe clips or other retaining pieces.

The laminate rubber pack 1530 is meant to engage between the lateral side plates 1520 in the same manner as described in connection with, for example, Fig. 12. To provide additional support between the side plates there may also be provided a cross-plate 1540 extending between the lateral side plates 1520. It is noted that the opposite ends of the cross-plate 1540 are welded to the side plates, and preferably a small gap is provided between the cross-plate 1540 and the pad pack 1530, as depicted in Fig. 28.

In the embodiment of Figs. 27 and 28 the pad pack 1530 is formed of a plurality of laminated rubber layers 1531 that are stacked together to form the pack. These layers may be compressed and the support rods 1529 then engaged. The support for the pack is offset of midway of the pack, but is still readily reversible from one working surface to the other. These working surfaces are depicted in Fig. 28 as ground engaging or working surfaces 1521 and 1523.

In previous embodiments described herein a force fit has been used to secure the rods or pins 1529 in place. However, there may be a need in certain applications to secure these pins or rods more positively. In the embodiment of Figs. 12-14 this is accomplished by means of a pin structure that is in the form of a reinforcing rod or other roughened surface rod or pin. This surface is most clearly depicted in Fig. 13 at 1241 in the form of a diagonal rib pattern similar to that used in a reinforcing rod typically used in cast concrete construction. The ends 1228 may be formed without the reinforcing ribs so as to easily mate with the slots in the side plates. In the embodiment of Fig. 27 either smooth or reinforced rods may be used.

A jig or the like may be used to stack the laminate layers 1531 with the layers having been drilled or punched with holes of a diameter so that the rods 1529 have to be force-fitted into the holes. In this way the rods are held firmly in place and the laminate layers are also firmly stacked against each other. This forms a unitary pad pack 1530 that can be easily secured in place with the use of only a couple of securing pins 1534 and associated nuts. In other embodiments of the invention only a single securing pin, or the like may be used, particularly where the slots are angled. Also, the securing pins or bolts can be reusable when one replaces a worn pad. New pad packs could thus be sold without requiring that the pins be sold with them.

Furthermore, the pad pack is also readily reversible once one side thereof is worn down. The pad pack is then dis-assembled by removal of the securing pins 1534 and the pad pack is reversed in position. For example, if the surface 1523 is first the working surface and gets worn down, the pad pack can then be reversed 180 degrees so that the surface 1521 then is facing downwardly and functions as the ground-engaging surface. The embodiment depicted in Fig. 27 can also be provided with a grouser point side so that, not only is the pad pack reversible, but the weldment itself can be reversed between respective resilient and grouser point sides.

The embodiment illustrated in Fig. 27 is similar to the embodiment of Fig. 12. However, in Figs. 27 and 28 one side of the pad pack is made with a larger dimension wear surface or area. This is clearly depicted in Fig. 28 where the wear area shown by dimension W2 is about three times larger or deeper than the wear area shown by the dimension W1. This provides a larger initial wear area. Once this surface 1523 is worn down then the pad can be reversed so that the surface 1521 becomes the ground engaging wear surface.

Another variation to that described in Fig. 27 uses a pad that is not meant to be reversed. This has the advantage of being able to use less resilient material in the pad. The can thus be made cheaper. In connection with the diagram in Fig. 28 the material in area W1 can be reduced substantially.

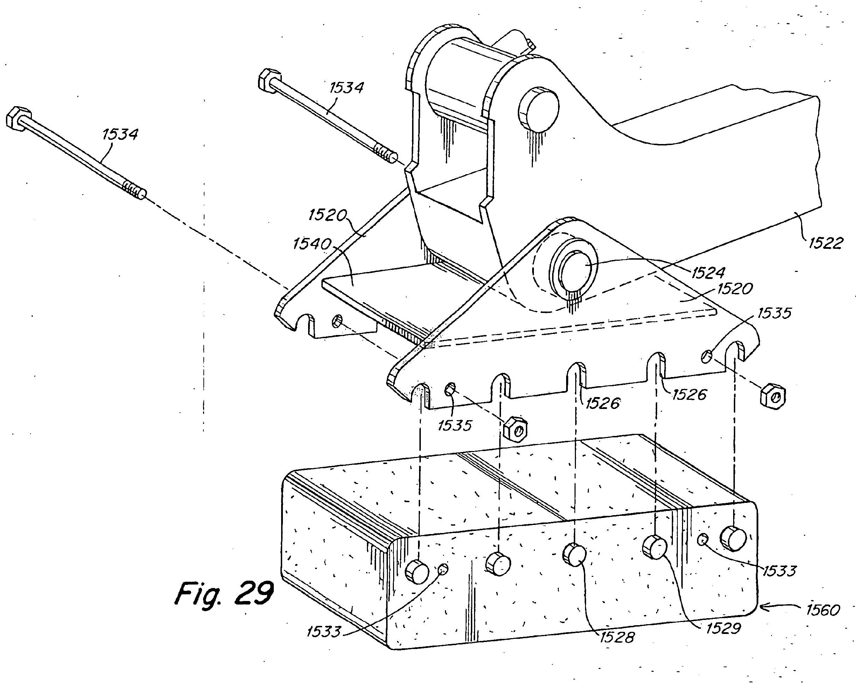

Reference is now made to Fig. 29 for a further embodiment of the present invention that is similar to the embodiment in Figs. 27-28, but uses a solid pad rather than a laminated pad. In Fig. 29 the weldment is meant primarily only for engagement with surfaces that are best suited for use with a resilient pad construction, such as on concrete or asphalt surfaces. The stabilizer pad construction includes a pair of laterally disposed side flanges or plates 1520 that is supported, by means of rotating pin 1524, from the distal end of the stabilizer arm 1522. The lateral flanges, plates or plate members 1520 include at their lower edge receiving slots 1526. The slots 1526 receive the ends 1528 of the support rods 1529 of the resilient pad pack 1560. The pad pack 1560 is a solid rubber construction and is also provided with a pair of through holes 1533 that receive respective retaining pins 1534. The retaining pins 1534 are also received by the holes 1535 in each of the lateral side plates 1520. In Fig. 29 the pad is also formed with an offset like that shown in Fig. 27 and with a deeper pad segment on one side for enhanced wear.

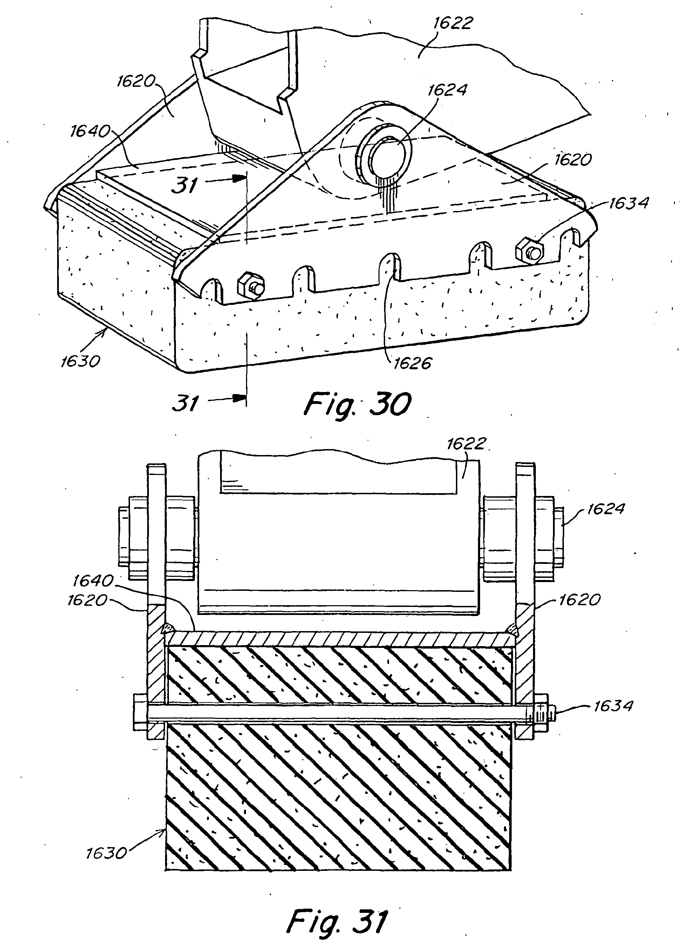

Reference is now made to a further embodiment of the present invention illustrated in Figs. 30-31. This embodiment of the invention is similar to that described in, for example, Fig. 29. In Figs. 30 and 31 the weldment is meant primarily only for engagement with surfaces that are best suited for use with a resilient pad construction, such as on concrete or asphalt surfaces, but may also be used without the rubber as a grouser pad. This pad may also be referred to as a "street pad". The stabilizer pad construction includes a pair of laterally disposed side flanges or plates 1620 that is supported, by means of rotating pin 1624, from the distal end of the stabilizer arm 1622. The lateral flanges, plates or plate members 1620 are substantially the same as described in Fig. 27, including at their lower edge receiving slots 1626, which for this particular embodiment are optional. The solid rubber pad 1630 also is provided with a pair of through holes that receive respective retaining pins or bolts 1634, and as depicted in Figs. 30 and 31. The retaining pins 1634 are also received by holes in each of the lateral side plates 1620. In Figs. 30 and 31 the retaining pins are in the form of elongated bolts, each with an end securing nut, as illustrated. In other embodiments other types of securing members may be used such as rods with end slots for receiving horseshoe clips or other retainers. Also, in this embodiment a solid pad is shown but a laminated pad can also be employed.

The laminate rubber pack 1630 is meant to engage between the lateral side plates 1620 in the same manner as described in connection with, for example, Fig. 12. In the embodiment of Fig. 30, to provide additional support between the side plates there is provided a cross-plate 1640 extending between the lateral side plates 1620. It is noted that the opposite ends of the cross-plate 1640 are welded to the side plates, and preferably no gap is provided between the cross-plate 1640 and the pad pack 1630, as depicted in Fig. 31.

In Fig. 30 it is noted that there are no support rods used. Instead, the pad pack is supported primarily by being backed against the support plate 1640. The cross-sectional view of Fig. 31 shows the contact between the support plate 1640 and the upper surface of the pad 1630. Also, the plates 1620 need not be provided with slots 1626, but are provided with passages for receiving the securing pins or bolts 1634. The securing pins 1634 are meant for just holding the pad in place, but are not meant as the primary support or force transfer for the resilient pad. In still another embodiment, only bolts, or the like are used, either without the cross plate or, if used, spaced from the cross plate.

## Claims

1. A stabilizer pad apparatus comprising:
a pair of plate members (1066, 1086, 1110, 1120, 1220, 1320, 1420, 1520) supported from a stabilizer arm (1067, 1087, 1222, 1322, 1422, 1522, 1622);
a pad assembly that is adapted for mounting between said pair of plate members;
said pad assembly including a resilient pad (1070,1080,1130,1230,1330,1450,1530,1560,1630) having opposite ground engageable work surfaces and opposite support surfaces, and a plurality of support members (1072,1082,1090,1229,1246,1430,1529) extending from the opposite support surfaces of said resilient pad(1070,1080,1130,1230,1330,1450,1530,1560,1630); at least one retaining member (1084,1116,1134,1234,1246,1248,1331,1451,1534,1634) extending through said resilient pad (1070,1080,1130,1230,1330,1450,1530,1560,1630) and between said plate members for holding said pad assembly to said plate members;
**characterised in that** :
said support members (1072,1082,1090,1229,1246,1430,1529) each adapted for engagement with at least one receiving slot
(1095,1126,1226,1326,1350,1366,1432,1526,1626) of at least one of said plate members (1066,1086,1110,1120,1220,1320,1420,1520) for mounting of said pad assembly to said plate members; and said retaining member (1084,1116,1134,1234,1246,1248,1331,1451,1534,1634) being removable to permit said resilient pad
(1070,1080,1130,1230,1330,1450,1530,1560,1630) to be moved between said opposite work surfaces and to be re-engagable so as to permit selective positioning of either of said opposite work surfaces for use as a surface for ground engagement.

2. A stabilizer pad apparatus as set forth in claim 1 wherein said resilient pad is formed as a molded rubber pad having at least one hole for receiving said at least one retaining member.

3. A stabilizer pad apparatus as set forth in claim 1 wherein said resilient pad comprises a plurality of laminated rubber layers.

4. A stabilizer pad apparatus as set forth in claim 1 wherein said opposite ground engageable work surfaces are disposed transverse to said opposite support surfaces.

5. A stabilizer pad apparatus as set forth in claim 1 wherein said support members are disposed in separate sets at each side of the resilient pad and extend outwardly from the opposite support surfaces.

6. A stabilizer pad apparatus as set forth in claim 1 wherein said support members are comprised of elongated support rods.

7. A stabilizer pad apparatus as set forth in claim 1 wherein said plate member each have a plurality of spaced slots.

8. A stabilizer pad apparatus as set forth in claim 7 wherein said slots are one of straight slots and tapered slots.

9. A stabilizer pad apparatus as set forth in claim 1 wherein said receiving slot is an open slot.

10. A stabilizer pad apparatus as set forth in claim 1 wherein said receiving slot comprises a groove.

## Patentansprüche

1. Eine Stabilisierungsunterlage, die Folgendes umfasst:
ein Paar von Plattengliedern (1066, 1086, 1110, 1120, 1220, 1320, 1420, 1520), die von einem Stabilisatorarm (1067, 1087, 1222, 1322, 1422, 1522, 1622) getragen werden,
einen Unterlagenaufbau, der zur Montage zwischen dem Paar von Plattengliedern ausgebildet ist,
wobei der Unterlagenaufbau eine elastische Unterlage (1070, 1080, 1130, 1230, 1330, 1450, 1530, 1560, 1630) einschließt, die gegenüberliegende Arbeitsoberflächen hat, welche mit dem Boden in Eingriff gebracht werden könne, und gegenüberliegende Stützoberflächen, und eine Vielzahl von Stützgliedern (1072, 1082, 1090, 1229, 1246, 1430, 1529), die sich von den gegenüberliegenden Stützoberflächen der elastischen Unterlage (1070, 1080, 1130, 1230, 1330, 1450, 1530, 1560, 1630) erstrecken,
mindestens ein Halteglied (1084, 1116, 1134, 1234, 1246, 1248, 1331, 1451, 1534, 1634), das sich durch die elastische Unterlage (1070, 1080, 1130, 1230, 1330, 1450, 1530, 1560, 1630) und zwischen den Plattengliedern erstreckt, um den Unterlagenaufbau an den Plattengliedern zu halten,
**dadurch gekennzeichnet, dass**:
jedes der Stützglieder (1072, 1082, 1090, 1229, 1246, 1430, 1529) für den Eingriff in mindestens einen Aufnahmeschlitz (1095, 1126, 1226, 1326, 1350, 1366, 1432, 1526, 1626) von mindestens einem der Plattenglieder (1066, 1086, 1110, 1120, 1220, 1320, 1420, 1520) zur Montage des Unterlagenaufbaus an den Plattengliedern geeignet ist; und
wobei das Halteglied (1084, 1116, 1134, 1234, 1246, 1248, 1331, 1451, 1534, 1634) entnehmbar ist, um es zu ermöglichen, dass die elastische Unterlage (1070, 1080, 1130, 1230, 1330, 1450, 1530, 1560, 1630) zwischen den gegenüberliegenden Arbeitsoberflächen entnommen wird und erneut in Eingriff gebracht wird, um eine selektive Positionierung einer der gegenüberliegenden Arbeitsoberflächen zur Verwendung als Oberfläche für den Eingriff mit dem Boden zu ermöglichen.

2. Eine Stabilisierungsunterlage wie in Anspruch 1 ausgeführt, wobei die elastische Unterlage als Gummiformunterlage geformt ist, die mindestens ein Loch zur Aufnahme des mindestens einen Halteglieds hat.

3. Eine Stabilisierungsunterlage wie in Anspruch 1 ausgeführt, wobei die elastische Unterlage eine Vielzahl laminierter Gummischichten umfasst.

4. Eine Stabilisierungsunterlage wie in Anspruch 1 ausgeführt, wobei die gegenüberliegenden Arbeitsoberflächen, die in den Boden eingreifen können, quer zu den gegenüberliegenden Stützoberflächen angeordnet sind.

5. Eine Stabilisierungsunterlage wie in Anspruch 1 ausgeführt, wobei die Stützglieder in separaten Gruppen auf jeder Seite der elastischen Unterlage angeordnet sind und sich von den gegenüberliegenden Stützoberflächen nach außen erstrecken.

6. Eine Stabilisierungsunterlage wie in Anspruch 1 ausgeführt, wobei die Stützglieder aus länglichen Stützstangen bestehen.

7. Eine Stabilisierungsunterlage wie in Anspruch 1 ausgeführt, wobei jedes der Plattenglieder eine Vielzahl beabstandeter Schlitze haben.

8. Eine Stabilisierungsunterlage wie in Anspruch 7 ausgeführt, wobei die Schlitze entweder gerade Schlitze oder spitz zulaufende Schlitze sind.

9. Eine Stabilisierungsunterlage wie in Anspruch 1 ausgeführt, wobei der Aufnahmeschlitz ein offener Schlitz ist.

10. Eine Stabilisierungsunterlage wie in Anspruch 1 ausgeführt, wobei der Aufnahmeschlitz eine Rille umfasst.

## Revendications

1. Bloc de stabilisation, comprenant:
une paire d'organes format plaques (1066, 1086, 1110, 1120, 1220, 1320, 1420, 1520) supportés à partir d'un bras de stabilisateur (1067, 1087, 1222, 1322, 1422, 1522, 1622) ;
un ensemble de patin, adapté pour montage entre ladite paire d'organes format plaques ;
ledit ensemble de patins comprenant un patin élastique (1070, 1080, 1130, 1230, 1330, 1450, 1530, 1560, 1630) ayant des surfaces de travail opposées, susceptibles de venir en prise avec le sol, et des surfaces supports opposées, et une pluralité d'organes supports (1072, 1082, 1090, 1229, 1246, 1430, 1529) s'étendant à partir des surfaces supports opposées dudit un patin élastique (1070, 1080, 1130, 1230, 1330, 1450, 1530, 1560, 1630);
au moins un organe de retenue (1084, 1116, 1134, 1234, 1246, 1248, 1331, 1451, 1534, 1634) s'étendant à travers ledit patin élastique (1070, 1080, 1130, 1230, 1330, 1450, 1530, 1560, 1630) et entre lesdits organes formant plaques, pour maintenir ledit ensemble de patins sur lesdits organes formant plaques ;
**caractérisé en ce que**
lesdits organes supports (1072, 1082, 1090, 1229, 1246, 1430, 1529) sont chacun adaptés pour venir en prise avec au moins une fente de réception (1095, 1126, 1226, 1326, 1350, 1366, 1432, 1526, 1626) d'au moins l'un desdits organes format plaques (1066, 1086, 1110, 1120, 1220, 1320, 1420, 1520), pour montage dudit ensemble de patins sur lesdits organes formant plaques ; et
ledit organe de retenue (1084, 1116, 1134, 1234, 1246, 1248, 1331, 1451, 1534, 1634) étant amovible, pour permettre audit patin élastique (1070, 1080, 1130, 1230, 1330, 1450, 1530, 1560, 1630) d'être déplacé entre lesdites surfaces de travail opposées et d'être remis en prise de manière à permettre un positionnement sélectif de chacune desdites surfaces de travail opposées pour utilisation en tant que surface pour la mise en prise avec le sol.

2. Bloc de stabilisation selon la revendication 1, dans lequel ledit patin élastique est formé sous forme de patin en caoutchouc moulé, comprenant au moins un trou pour recevoir ledit au moins un organe de retenue.

3. Bloc de stabilisation selon la revendication 1, dans lequel ledit patin élastique comprend une pluralité de couches en caoutchouc laminé.

4. Bloc de stabilisation selon la revendication 1, dans lequel lesdites surfaces de travail opposées, susceptibles de venir en prise avec le sol, sont disposées transversalement par rapport auxdites surfaces supports opposées.

5. Bloc de stabilisation selon la revendication 1, dans lequel lesdits organes supports sont disposés en des jeux séparés, de chaque côté du patin élastique, et d'étendent vers l'extérieur à partir des surfaces supports opposées.

6. Bloc de stabilisation selon la revendication 1, dans lequel lesdits organes supports sont composés de tiges supports allongées.

7. Bloc de stabilisation selon la revendication 1, dans lequel chaque dit organe formant plaque peut comprendre une pluralité de fentes espacées.

8. Bloc de stabilisation selon la revendication 7, dans lequel lesdites fentes sont l'une parmi des fentes rectilignes et des fentes en effilement.

9. Bloc de stabilisation selon la revendication 1, dans lequel ladite fente de réception est une fente ouverte.

10. Bloc de stabilisation selon la revendication 1, dans lequel ladite fente de réception comprend une gorge.
